# FASCICULE DE BREVET EUROPEEN

(11) **EP 2 659 360 B1**
(45) Date de publication et mention de la délivrance du brevet: **05.09.2018**
(21) Numéro de dépôt: 11799427.7
(22) Date de dépôt: 16.12.2011
(51) Int. Cl.: G06F 9/445, G06F 21/00, H04N 7/16

(54) **PROCEDE DE CHARGEMENT D'UN CODE D'AU MOINS UN MODULE LOGICIEL**
VERFAHREN ZUM LADEN DES CODE VON MINDESTENS EIN SOFTWARE-MODUL
METHOD FOR LOADING THE CODE OF AT LEAST ONE SOFTWARE MODULE

(30) Priorité: 29.12.2010 FR 1061340
(43) Date de publication de la demande: 06.11.2013
(73) Titulaire: Viaccess, 92057 Paris La Défense (FR)
(72) Inventeur: HAMON, Vincent, F-35000 Rennes (FR)
(74) Mandataire: Colombo, Michel
(86) Numéro de dépôt international: PCT/EP2011/073144
(87) Numéro de publication internationale: WO 2012/089541

(56) Documents cités:
- EP-A1- 1 868 127
- US-A1- 2007 113 088
- US-A1- 2009 193 230
- US-A1- 2009 257 595
- US-A1- 2009 290 712

## Description

L'invention concerne un procédé de chargement d'un code d'au moins un module logiciel dans une mémoire principale par un processeur de sécurité.

L'invention a également pour objet :
- un procédé de réception de contenu multimédia embrouillé,
- un support d'enregistrement d'informations pour la mise en oeuvre de ces procédés,
- un terminal pour la mise en oeuvre de ces procédés.

La mémoire principale est également connue sous le nom de « mémoire vive ». Il s'agit d'une mémoire à accès aléatoire couramment désignée par l'acronyme RAM (Random Access Memory). Il s'agit généralement d'une mémoire volatile, c'est-à-dire dont les informations sont effacées par une mise hors tension. La mémoire principale permet des accès rapides en lecture et en écriture. C'est la raison pour laquelle les instructions d'un programme à exécuter par le processeur de sécurité sont chargées dans cette mémoire à partir d'une ou plusieurs mémoires de masse dans lesquelles elles sont initialement enregistrées. Les mémoires de masse sont généralement des mémoires non-volatiles ayant de grandes capacités de stockage d'informations mais lentes en lecture et en écriture. Il n'est donc pas possible d'exécuter un programme directement à partir des instructions enregistrées en mémoire de masse.

L'invention s'applique en particulier au domaine du contrôle d'accès pour la fourniture de contenus multimédias payants tels que la télévision payante.

Dans cette description, on désigne plus spécifiquement par « contenu multimédia » un contenu audio et/ou visuel destiné à être restitué sous une forme directement perceptible et compréhensible par un être humain. Typiquement, un contenu multimédia correspond à une succession d'images formant un film, une émission de télévision ou de la publicité. Un contenu multimédia peut également être un contenu interactif tel qu'un jeu.

Pour sécuriser et soumettre la visualisation des contenus multimédias à certaines conditions, comme la souscription d'un abonnement payant par exemple, les contenus multimédias sont diffusés sous forme embrouillée et non pas en clair. Dans cette description, le canal est dit « embrouillé » lorsque le contenu multimédia diffusé sur ce canal est embrouillé.

Plus précisément, chaque contenu multimédia est divisé en une succession de cryptopériodes. Pendant toute la durée d'une cryptopériode, les conditions d'accès au contenu multimédia embrouillé demeurent inchangées. En particulier, pendant toute la durée d'une cryptopériode, le contenu multimédia est embrouillé avec le même mot de contrôle. Généralement, le mot de contrôle varie d'une cryptopériode à l'autre.

De plus, le mot de contrôle est généralement spécifique à un contenu multimédia, ce dernier étant aléatoirement ou pseudo aléatoirement tiré. Ainsi, si à un instant donné, N contenus multimédias sont simultanément diffusés sur N canaux, il existe N mots de contrôle différents et indépendants employés chacun pour embrouiller l'un de ces contenus multimédias.

Ici, les termes « embrouiller » et « chiffrer » sont considérés comme des synonymes. Il en est de même pour les termes « désembrouiller » et « déchiffrer ».

Le contenu multimédia en clair correspond au contenu multimédia avant que celui-ci ne soit embrouillé. Celui-ci peut être rendu directement compréhensible par un être humain sans avoir recours à des opérations de désembrouillage et sans que sa visualisation soit soumise à certaines conditions.

Les mots de contrôle nécessaires pour désembrouiller les contenus multimédias sont transmis de manière synchronisée avec les contenus multimédias. Par exemple, les mots de contrôle nécessaires pour désembrouiller la t-ième cryptopériode sont reçus par chaque terminal pendant la (t-1)-ième cryptopériode. Pour cela, par exemple, les mots de contrôle sont multiplexés avec le contenu multimédia embrouillé.

Pour sécuriser la transmission des mots de contrôle, ceux-ci sont transmis aux terminaux sous forme de cryptogrammes contenus dans des messages ECM (Entitlement Control Message).

On désigne ici par «cryptogramme» d'une donnée, une information insuffisante à elle seule pour retrouver la donnée en clair. Pour retrouver la donnée en clair, par exemple le mot de contrôle permettant de désembrouiller directement le contenu multimédia, son cryptogramme doit être combiné avec une information secrète. Par exemple, le cryptogramme d'une donnée est obtenu en chiffrant la donnée en clair avec une clé cryptographique. Dans ce cas, l'information secrète est la clé cryptographique permettant de déchiffrer ce cryptogramme. Un cryptogramme peut aussi être une référence à une donnée stockée dans une table contenant une multitude de données possibles. Dans ce cas, l'information secrète est la table associant à chaque référence une donnée en clair.

L'information secrète doit être préservée en lieu sûr. Pour cela, il a déjà été proposé de stocker l'information secrète dans des processeurs de sécurité tels que des cartes à puce directement connectées à chacun des terminaux.

Toutefois, l'utilisation de cartes à puce présente un certain nombre d'inconvénients. En particulier, si une faille sécuritaire majeure est découverte dans les cartes à puce, celles-ci doivent être remplacées physiquement par de nouvelles cartes à puce. Ceci est difficile à mettre en oeuvre à grande échelle.

Pour remédier à cet inconvénient, il a été proposé de remplacer les terminaux équipés de cartes à puce par des terminaux sans carte également connus sous le terme anglais de « cardless terminal ».

Dans ces terminaux, la carte à puce peut être remplacée par un module logiciel exécuté par un processeur de sécurité du terminal. Ces terminaux connus peuvent être équipés :
- d'une mémoire principale,
- d'un processeur de sécurité se présentant sous la forme d'un circuit intégré dans lequel est implémenté un microprocesseur apte à exécuter des instructions enregistrées dans la mémoire principale, un coprocesseur de sécurité, une mémoire non volatile et une mémoire à accès aléatoire accessible uniquement par le coprocesseur de sécurité, ce processeur étant raccordé à la mémoire principale par l'intermédiaire d'un bus de données,
- d'un code d'un système d'exploitation multitâches apte à ordonnancer l'exécution simultanée de plusieurs programmes utilisateurs lorsqu'il est exécuté par le processeur,
- d'un code d'un chargeur d'amorçage apte à charger dans la mémoire principale le code du système d'exploitation multitâches puis à lancer l'exécution de ce système d'exploitation à partir de cette mémoire principale lorsqu'il est exécuté par le processeur,
- des instructions d'un code d'amorçage qui charge en mémoire principale le code du chargeur d'amorçage lorsque ces instructions sont exécutées par le processeur, ces instructions étant enregistrées dans la mémoire non volatile du coprocesseur à partir de la première adresse sur laquelle pointe un compteur ordinal du processeur immédiatement après chaque réinitialisation de ce processeur,
- d'une ou plusieurs mémoires non volatiles contenant le code du module logiciel.

Ces terminaux ont donc une architecture proche de celle d'un ordinateur conventionnel. En particulier, pour pouvoir être exécuté, le code du module logiciel doit être chargé dans la mémoire principale du terminal. Par « code », on désigne le code exécutable ou interprétable soit par l'interpréteur natif soit par une machine virtuelle, de bas niveau implémentée dans le processeur de sécurité.

A cet effet, dans les procédés connus, le processeur de sécurité exécute :
- le code d'amorçage qui charge en mémoire principale le code du chargeur d'amorçage puis lance l'exécution de ce chargeur d'amorçage à partir de la mémoire principale, puis
- le code du chargeur d'amorçage pour charger dans la mémoire principale le code du système d'exploitation multitâches configuré pour utiliser uniquement une plage d'adresses réduite de la mémoire principale, puis lancer l'exécution de ce système d'exploitation à partir de cette mémoire principale,
- le système d'exploitation pour ordonnancer l'exécution simultanée de plusieurs programmes utilisateurs par ce processeur.

Ensuite, le système d'exploitation lance l'exécution du module logiciel et met en place des mécanismes de sécurisation pour empêcher que le code du module logiciel soit corrompu ou falsifié.

Les systèmes d'exploitation sont de plus en plus complexes. Il existe donc une probabilité importante qu'il existe des dysfonctionnements dans ces systèmes d'exploitation. Ces dysfonctionnements sont connus sous le terme de « bogues ». Un tel dysfonctionnement peut être exploité pour retirer les mécanismes de sécurisation qui protègent le module logiciel. Il est donc difficile de garantir qu'il n'existe pas de faille sécuritaire lorsque le module logiciel est chargé par un système d'exploitation. Cette garantie est d'autant plus difficile à donner que les développeurs des systèmes d'exploitation sont des personnes différentes de celles qui développent le module logiciel. De plus, les tentatives de cryptanalyse du module logiciel doivent être rendues plus difficiles.

De l'état de la technique est également connu de US2009/257595A1 qui décrit une méthode et un dispositif pour amorcer de manière sécurisée des composants logiciels, US2009/290712A1 qui décrit un processeur dans lequel le module logiciel a protégé est stocké dans une mémoire flash sécurisée de manière chiffrée et cette mémoire sécurisée n'est accessible que par un bus privé, EP1868127A1, US2009/193230A1, US2007/113088A1.

L'invention vise à remédier à au moins l'un de ces inconvénients. Elle a donc pour objet un procédé de chargement d'un code d'au moins un module logiciel dans une mémoire principale conforme à la revendication 1.

Dans le procédé ci-dessus, le soin de charger le module logiciel n'est pas laissé au système d'exploitation. Cela garantit que des dysfonctionnements du système d'exploitation ne peuvent pas être exploités pour éviter le chargement de ce module logiciel ou encore pour charger un module logiciel modifié dans la mémoire principale.

De plus, le module logiciel est enregistré dans une plage d'adresses non utilisable par le système d'exploitation. Dès lors, aucun programme utilisateur ne peut accéder au code du module logiciel sans passer par le système de fichiers spécifique. En effet, si un programme utilisateur essaye de lire ou d'écrire en dehors de la plage d'adresses utilisable par le système d'exploitation sans utiliser le système de fichiers spécifique, cela provoque systématiquement une erreur qui empêche une telle lecture ou écriture. L'accès au code du module logiciel est donc protégé par le système d'exploitation lui-même. En particulier, l'exploitation de bogues du système d'exploitation pour accéder au code du module logiciel n'est plus possible. La cryptanalyse du code du module logiciel est donc rendue plus difficile.

Les modes de réalisation de ce procédé de chargement peuvent comporter une ou plusieurs des caractéristiques des revendications dépendantes.

Ces modes de réalisation du procédé de chargement présentent en outre les avantages suivants :
- le fait que le code d'amorçage, qui est enregistré dans une mémoire non modifiable, authentifie le chargeur d'amorçage rend difficile toute tentative de modification du chargeur d'amorçage;
- le fait que le chargeur d'amorçage, qui a lui-même été authentifié au préalable par le code d'amorçage, active l'authentification du module logiciel rend très difficile toute modification malveillante du code du module logiciel;
- le fait que les instructions du code du module logiciel enregistré dans la mémoire principale ne soient déchiffrées qu'à l'intérieur du circuit intégré du processeur permet de préserver la confidentialité de ce code;
- le fait d'enregistrer dans une mémoire de masse le module logiciel directement sous forme chiffrée avec la clé utilisée pour occulter le code de ce module logiciel, évite une opération de déchiffrement lors du chargement du code du module logiciel de la mémoire de masse vers la mémoire principale ;
- le fait que des données générées par le module logiciel lors de son exécution, soient enregistrées dans la mémoire principale dans une plage d'adresses occultée par le coprocesseur permet de préserver la confidentialité de ces données;
- le fait que le chargeur d'amorçage, qui a lui-même été authentifié au préalable par le code d'amorçage, active l'authentification du code du système d'exploitation rend très difficile toute modification malveillante de ce système d'exploitation pour remplacer les appels au module logiciel par des appels vers un autre logiciel;
- charger le code du module logiciel dans une plage continue d'adresses facilite la vérification de son authenticité et l'occultation de son code dans la mémoire principale.

L'invention a également pour objet un procédé de réception de contenu multimédia embrouillé conforme à la revendication 10.

L'invention a également pour objet un support d'enregistrement d'informations comportant des instructions pour la mise en oeuvre de l'un des procédés ci-dessus, lorsque ces instructions sont exécutées par un processeur électronique de sécurité.

L'invention a également pour objet un terminal conforme à la revendication 12.

Les modes de réalisation de ce terminal peuvent comporter la caractéristique de la revendication dépendante de terminal.

D'autres caractéristiques et avantages de l'invention ressortiront clairement de la description qui va suivre donnée uniquement à titre indicatif et nullement limitatif et faite en référence aux dessins annexés sur lesquels :
- la figure 1 est une illustration schématique d'un système d'émission et de réception de contenu multimédia embrouillé ;
- la figure 2 est une illustration schématique d'une unité centrale mise en oeuvre dans le système de la figure 1 ;
- la figure 3 est un organigramme d'un procédé de chargement d'un code d'un module logiciel dans une mémoire principale de l'unité centrale de la figure 2 ;
- la figure 4 est un organigramme d'un procédé de réception de contenu multimédia embrouillé ; et
- la figure 5 est un organigramme d'une variante du procédé de la figure 3.

Dans ces figures les mêmes références sont utilisées pour désigner les mêmes éléments.

Dans la suite de cette description, les caractéristiques et fonctions bien connues de l'homme du métier ne sont pas décrites en détail. De plus, la terminologie utilisée est celle des systèmes d'accès conditionnels à des contenus multimédias. Pour plus d'informations sur cette terminologie, le lecteur peut se reporter au document suivant :
« Functional Model of Conditional Access System », EBU Review, Technical European Broadcasting Union, Brussels, BE, n° 266, 21 décembre 1995.

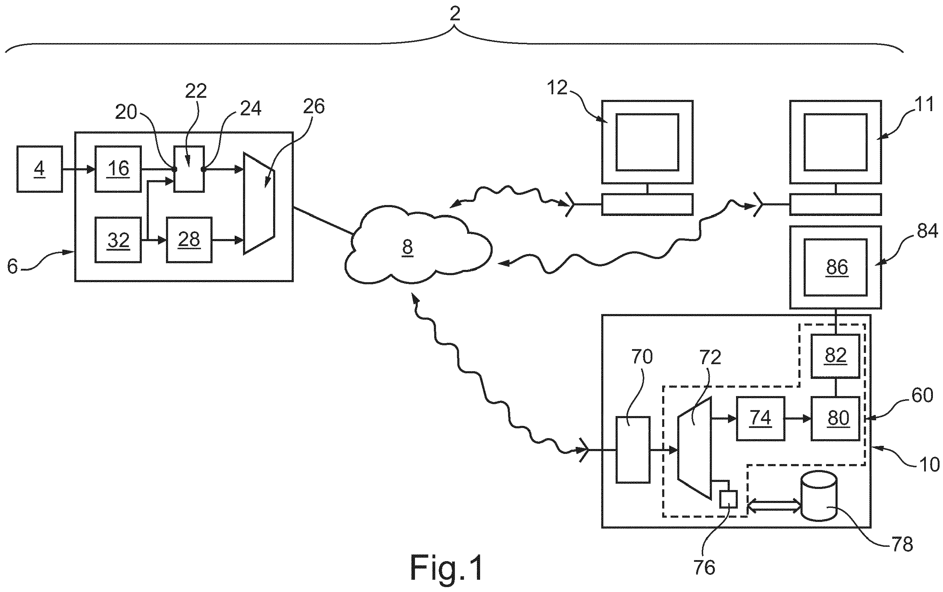

La figure 1 représente un système 2 d'émission et de réception de contenus multimédias embrouillés. Les contenus multimédias émis sont des contenus multimédias linéarisés. Par exemple, un contenu multimédia correspond à une séquence d'un programme audiovisuel tel qu'une émission de télévision ou un film.

Les contenus multimédias en clair sont générés par une ou plusieurs sources 4 et transmis à un dispositif 6 de diffusion. Le dispositif 6 diffuse les contenus multimédias simultanément vers une multitude de terminaux de réception à travers un réseau 8 de transmission d'informations. Les contenus multimédias diffusés sont synchronisés temporellement les uns avec les autres pour, par exemple, respecter une grille préétablie de programmes.

Le réseau 8 est typiquement un réseau grande distance de transmission d'informations tel que le réseau Internet ou un réseau satellitaire ou tout autre réseau de diffusion tel que celui utilisé pour la transmission de la télévision numérique terrestre (TNT).

Pour simplifier la figure 1, seuls trois terminaux 10 à 12 de réception sont représentés.

Le dispositif 6 comprend un encodeur 16 qui encode les contenus multimédias qu'il reçoit. L'encodeur 16 traite des contenus multimédias numériques. Par exemple, cet encodeur fonctionne conformément à la norme MPEG2 (Moving Picture Expert Group - 2) ou la norme UIT-T H264.

Les contenus multimédias compressés sont dirigés vers une entrée 20 d'un embrouilleur 22. L'embrouilleur 22 embrouille chaque contenu multimédia compressé pour conditionner sa visualisation à certaines conditions telles que l'achat d'un titre d'accès par les utilisateurs des terminaux de réception. Les contenus multimédias embrouillés sont restitués sur une sortie 24 raccordée à l'entrée d'un multiplexeur 26.

L'embrouilleur 22 embrouille chaque contenu multimédia compressé à l'aide d'un mot de contrôle CW_{i,t} qui lui est fourni, ainsi qu'à un système 28 d'accès conditionnel, par un générateur 32 de clés. Le système 28 est plus connu sous l'acronyme CAS (Conditional Access System). L'indice i est un identifiant du canal sur lequel est diffusé le contenu multimédia embrouillé et l'indice t est un numéro d'ordre identifiant la cryptopériode embrouillée avec ce mot de contrôle.

Typiquement, cet embrouillage est conforme à une norme telle que la norme DVB-CSA (Digital Video Broadcasting - Common Scrambling Algorithm), ISMA Cryp (Internet Streaming Media Alliance Cryp), SRTP (Secure Real-time Transport Protocol), AES (Advanced Encryption Standard), ... etc.

Pour chaque canal i, le système 28 génère des messages ECM_{i,t} (Entitlement Control Message) contenant au moins le cryptogramme CW*_{i,t}, préalablement calculé, du mot de contrôle CW_{i,t} généré par le générateur 32 et utilisé par l'embrouilleur 22 pour embrouiller la cryptopériode t du canal i. Ces messages et les contenus multimédias embrouillés sont multiplexés par le multiplexeur 26, ces derniers étant respectivement fournis par le système 28 d'accès conditionnel et par l'embrouilleur 22, avant d'être transmis sur le réseau 8.

Le système 28 insère également dans chaque ECM :
- les cryptogrammes CW*_{i,t} et CW*_{i,t+1}, calculés par le système 28, des mots de contrôle CW_{i,t} et CW_{i,t+1} permettant de désembrouiller les cryptopériodes t et t+1 immédiatement consécutives du canal i,
- des conditions d'accès CA destinées à être comparées à des titres d'accès acquis par l'utilisateur, et
- une signature ou une redondance cryptographique MAC permettant de vérifier l'intégrité du message ECM.

Le message ECM contenant la paire de mots de contrôle CW_{i,t}/CW_{i,t+1} est noté ECM_{i,t} dans la suite de la description.

Ici, l'indice t identifie également la cryptopériode CP_{i,t} désembrouillable à l'aide du mot de contrôle CW_{i,t} contenu dans le message ECM_{i,t}. L'indice t est unique pour chaque cryptopériode CP_{i,t}.

A titre d'illustration, ici, l'embrouillage et le multiplexage des contenus multimédias est conforme au protocole DVB-Simulcrypt (ETSI TS 103 197).

Dans l'exemple, les terminaux 10 à 12 sont identiques. Aussi, par la suite seul le terminal 10 est décrit plus en détail.

Le terminal 10 est ici décrit dans le cas particulier où celui-ci est capable de désembrouiller simultanément un seul canal i. A cet effet, le terminal 10 comporte :
- une unité centrale 60 permettant le désembrouillage du canal i, et
- un récepteur 70 de contenus multimédias diffusés raccordé à une entrée de l'unité centrale 60.

L'unité 60 désembrouille le canal i pour l'afficher sur un afficheur 84.

Par exemple, l'afficheur 84 est une télévision, un ordinateur ou encore un téléphone fixe ou mobile. Ici, l'afficheur est une télévision.

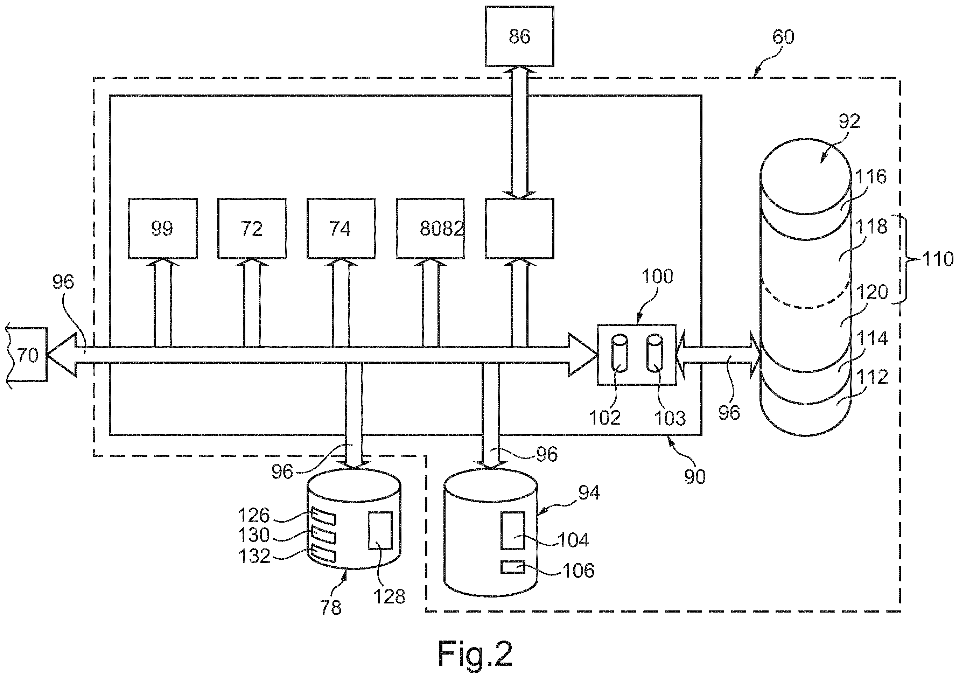

Sur la figure 1, les différentes fonctionnalités de l'unité 60 sont représentées sous forme de blocs fonctionnels. L'architecture matérielle de l'unité 60 permettant de réaliser ces différents blocs fonctionnels est décrite en référence à la figure 2. L'unité 60 comprend un démultiplexeur 72 qui transmet d'un côté le contenu multimédia à un désembrouilleur 74 et d'un autre côté les messages ECM_{i,t} et EMM (Entitlement Management Message) à un module 76 d'accès conditionnel au contenu multimédia.

Le désembrouilleur 74 désembrouille le contenu multimédia embrouillé à partir du mot de contrôle transmis par le module 76. Le contenu multimédia désembrouillé est transmis à un décodeur 80 qui le décode. Le contenu multimédia décompressé ou décodé est transmis à une carte graphique 82 qui pilote l'affichage de ce contenu multimédia sur l'afficheur 84 équipé d'un écran 86.

L'afficheur 84 affiche en clair le contenu multimédia sur l'écran 86

L'unité 60 traite, entre autre, des informations confidentielles telles que des clés cryptographiques. Pour préserver la confidentialité de ces informations, elle est conçue pour être le plus robuste possible vis-à-vis des tentatives d'attaques menées par des pirates informatiques.

L'unité 60 est raccordée à une mémoire 78 de masse dans laquelle sont enregistrés, de façon non volatile, notamment, des données et des codes de différents programmes à exécuter pour déchiffrer les cryptogrammes CW*_{i,t}.

La figure 2 représente plus en détail l'unité 60. Ici, l'unité 60 comporte :
- un processeur électronique 90 de sécurité,
- une mémoire principale 92,
- une mémoire non volatile 94,
- des bus 96 de données et d'adresses reliant le processeur 90 aux mémoires 78, 92, 94 et au récepteur 70.

Le processeur 90 est un processeur programmable apte à exécuter des instructions enregistrées dans la mémoire 78. A cet effet, le processeur 90 incorpore un microprocesseur principal 99 et différents coprocesseurs dédiés chacun à une tâche spécifique.

Dans ce mode de réalisation, à titre d'illustration, le processeur 90 comprend un coprocesseur spécifique pour chacun des blocs fonctionnels 72, 74, 80 et 82 de la figure 1. Sur la figure 2, ces coprocesseurs portent les mêmes références numériques que le bloc fonctionnel correspondant sur la figure 1. Ainsi, le processeur 90 comprend :
- un coprocesseur 72 pour le démultiplexage des flux multimédia reçu par le récepteur 70,
- un coprocesseur 74 pour le désembrouillage des contenus multimédias,
- un coprocesseur 80 pour le décodage des contenus multimédias, et
- un coprocesseur 82 pour l'affichage vidéo.

Chacun de ces coprocesseurs est capable d'exécuter des instructions en parallèle de celles exécutées par le microprocesseur 99. Ainsi, de tels coprocesseurs permettent d'exécuter des tâches plus rapidement que si seul le microprocesseur 99 était utilisé.

Ici, le processeur 90 se présente sous la forme d'un seul circuit intégré sur lequel sont réalisés à la fois le microprocesseur 99 et les différents coprocesseurs. Ce circuit intégré est logé dans un seul boîtier. Typiquement, le microprocesseur 99 et les différents coprocesseurs sont gravés sur le même morceau de silicium. Un tel processeur est également connu le terme de « Système sur puce » ou sous l'acronyme anglais de SoC (« System on Chip »).

Le microprocesseur 99 présente tous les éléments d'un microprocesseur classique. En particulier, le microprocesseur 99 incorpore une unité arithmétique et logique et différents registres pour exécuter des instructions enregistrées dans la mémoire principale 92. L'un de ces registres contient l'adresse de la prochaine instruction à exécuter. Ce registre est également connu sous le terme de compteur ordinal.

Le processeur 90 est ici qualifié de processeur de sécurité car il incorpore également un coprocesseur 100 de sécurité. Un exemple de processeur de sécurité est décrit dans la demande de brevet US20050169468.

Le coprocesseur 100 est configurable pour exécuter de façon autonome un certain nombre de tâches telles que l'exécution de fonctions cryptographiques. Par exemple, ce coprocesseur 100 est équipé à cet effet :
- de sa propre unité arithmétique et logique,
- d'une mémoire 102 non volatile accessible en lecture seulement, et
- d'une mémoire 103 à accès aléatoire.

Les mémoires 102 et 103 sont uniquement accessibles par le coprocesseur 100. En particulier, aucun programme, exécuté par le processeur 90 et dont le code est chargé à partir d'une mémoire extérieure au processeur 90, ne peut accéder au contenu de ces mémoires 102 et 103.

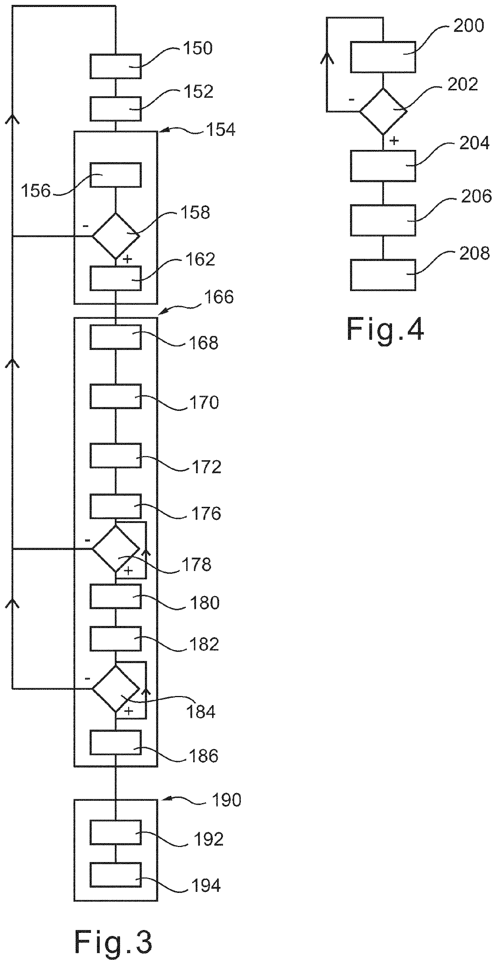

La mémoire 102 contient des clés cryptographiques et les codes exécutables des fonctions cryptographiques utilisées lors de la mise en oeuvre du procédé de la figure 3.

Ici, la mémoire 102 contient notamment les clés cryptographiques suivantes :
- des clés K_{oc1} et K_{oc2} utilisées pour occulter, respectivement, une première et seconde plages de la mémoire 92,
- une clé K_{ACS} permettant de déchiffrer le code d'un module ACS,
- des clés publiques K_{PubOS}, K_{PubBL} et K_{PubACS} correspondant respectivement à des clés privées K_{PrivOS}, K_{PrivBL} et K_{PrivACS} utilisées pour vérifier des signatures.

La mémoire 102 comporte, en particulier, des codes exécutables pour réaliser :
- l'authentification d'un contenu de la mémoire principale 92 ou des mémoires 78 et 94, et
- l'occultation d'un contenu de la mémoire principale 92.

Plus précisément, la mémoire 102 comprend un code exécutable permettant d'amorcer le système et d'authentifier le contenu d'une plage de données stockées dans la mémoire 92 ou 94 lorsqu'il est exécuté par le coprocesseur 100. Cette fonction, appelée ici « contrôle d'intégrité dynamique », admet notamment comme paramètres d'entrée :
- les adresses physiques de début et de fin de la plage de données dans la mémoire, et
- l'adresse où se trouve la signature permettant de vérifier l'authenticité des données comprises entre les adresses de début et de fin.

Le contrôle d'intégrité dynamique retourne la valeur « vrai » si le contenu de la plage de données entre les adresses de début et de fin correspond effectivement à la signature indiquée. Dans le cas contraire, cette fonction retourne la valeur « faux ».

Une fois paramétrée, l'exécution du contrôle d'intégrité dynamique est déclenchée à un intervalle régulier par le coprocesseur 100. Lorsque cette fonction a été configurée et activée, on dit que la plage de données identifiée par ses adresses de début et de fin en mémoire a été mise sous contrôle dynamique d'intégrité.

La mémoire 102 comprend le code exécutable d'une fonction d'occultation des données contenues dans une plage continue d'adresses en mémoire principale 92. Cette fonction d'occultation admet notamment comme paramètre d'entrée les adresses de début et de fin de la plage. Lorsque cette fonction est activée, à chaque fois que le processeur 90 écrit une donnée dans cette plage d'adresses, la fonction d'occultation est exécutée par le coprocesseur 100 pour chiffrer cette donnée avant qu'elle soit déposée sur le bus 96. Cette donnée est ensuite enregistrée sous forme chiffrée dans la mémoire 92. Ainsi, seule la donnée chiffrée circule en dehors du processeur 90. De façon similaire, à chaque fois que le processeur 90 lit une donnée dans cette plage d'adresses, le coprocesseur 100 déchiffre la donnée chiffrée reçue par l'intermédiaire du bus 96 avant que celle-ci ne soit transmise pour traitement, par exemple, au microprocesseur 99 ou à l'un des coprocesseurs 72, 74, 80 et 82.

Le fait qu'une plage de données soit occultée par le coprocesseur 100 est donc totalement transparent pour le microprocesseur 99 et pour tout autre coprocesseur du processeur 90. En effet, le microprocesseur 99, comme les autres coprocesseurs, est totalement déchargé de ces opérations de chiffrement et déchiffrement des données écrites ou lues dans la mémoire 92. L'occultation des données contenues dans la mémoire principale permet de conserver la confidentialité de ces données même si la mémoire principale peut être lue par n'importe quel logiciel espion.

Lorsque le coprocesseur 100 est configuré pour occulter une plage de données, on dit que cette plage ou section de mémoire est occultée.

Les codes et données enregistrés dans la mémoire 102 sont protégés car ils sont enregistrés dans une mémoire en lecture seule et cette mémoire est non volatile. D'autre part, le contenu de la mémoire 102 n'a pas besoin d'être copié dans la mémoire principale 92 pour permettre l'exécution de ces algorithmes de chiffrement et de déchiffrement. En fait, le coprocesseur 100 comporte en interne l'ensemble des composants nécessaires pour permettre l'exécution des codes exécutables enregistrés dans la mémoire 102 sans qu'il soit nécessaire pour cela de les copier dans une autre mémoire externe telle que par exemple la mémoire principale 92.

La mémoire 94 est une mémoire non volatile. Par exemple il s'agit d'une mémoire « flash ». Cette mémoire 94 contient ici le code 104 d'un chargeur d'amorçage ainsi que la signature 106 de ce chargeur d'amorçage à l'aide de la clé privée K_{PrivBL}. Le chargeur d'amorçage 104 est décrit plus en détail en référence à la figure 3.

La mémoire principale 92 est typiquement une mémoire RAM (Random Access Memory). Cette mémoire 92 est également typiquement volatile.

La mémoire principale 92 contient les instructions et les données exécutées par le processeur 90.

Sur la figure 2, une partition particulière de la mémoire 92 est représentée. Plus précisément, la mémoire 92 est partitionnée :
- en une section 110 réservée au système d'exploitation,
- en une section 112 réservée pour y enregistrer le code d'un module ACS qui est décrit plus en détail en référence aux figures 3 et 4,
- en une section 114 réservée pour le stockage des données générées par le module ACS lors de son exécution, et
- éventuellement, en une ou plusieurs sections supplémentaires 116 utilisées pour d'autres applications telles que pour des traitements vidéo.

La section 110 est elle-même partitionnée en deux sous-sections 118 et 120. La sous-section 118 contient le code du noyau. La sous section 120 est utilisée par le système d'exploitation pour subvenir aux différents besoins mémoires notamment ceux des programmes utilisateurs.

La mémoire 78 est une mémoire de masse telle qu'un disque dur ou autre dispositif similaire. Il s'agit d'une mémoire non volatile à partir de laquelle il n'est pas possible d'exécuter directement le code exécutable d'un programme.

Ici, cette mémoire 78 comprend :
- le code 126 du module ACS.
- le code 128 du système d'exploitation.
- une signature 130 du code 126 du module ACS obtenue à l'aide de la clé privée K_{PrivACS}, et
- une signature 132 du code 128 obtenue avec la clé privée K_{PrivOS}.

Dans la mémoire 78, le code 126 est enregistré sous forme chiffrée à l'aide de la clé K_{ACS}.

Ici, le système d'exploitation est un système d'exploitation LinuxO version 2.6.23 auquel sont intégrées différentes fonctionnalités qui vont maintenant être décrites. Ces fonctionnalités ne nécessitent aucune modification des sources existantes du noyau Linux. Elles peuvent être ajoutées au noyau par recompilation ou sous la forme de modules noyaux Linux.

Le système d'exploitation Linux gère un mécanisme de mémoire virtuelle. De tels mécanismes sont bien connus et seules quelques explications sont données ici. Typiquement, ce mécanisme de mémoire virtuelle est ici un mécanisme de pagination de la mémoire principale 92. En effet, les adresses des données d'un programme utilisateur sont codées sur N bits de sorte que l'espace virtuel d'adressage d'un programme s'étend entre 0 et 2^{N}, où N est un entier. Généralement, N est un entier supérieur ou égal à seize ou trente deux. Ainsi, l'espace virtuel d'adressage est bien plus grand que le nombre d'adresses physiques disponibles dans la mémoire principale 92. Pour remédier à cet inconvénient, le système d'exploitation charge de la mémoire 78 vers la mémoire principale 92 uniquement des pages où se trouvent des données ou des instructions requises par le programme utilisateur en cours d'exécution. Les autres pages de données formant le programme utilisateur restent dans la mémoire 78. Plus précisément, sous Linux les pages de programmes sont chargées uniquement dans la sous-section utilisateur 120. Les programmes qui s'exécutent à partir de la sous-section utilisateur sont appelés ici « programmes utilisateurs ».

Le mécanisme de pagination s'occupe donc :
- de charger automatiquement dans la mémoire principale les pages requises pour l'exécution du programme utilisateur, et
- de convertir les adresses virtuelles, exprimées dans l'espace d'adressage virtuel du programme utilisateur, en adresses physiques dans la mémoire 92 où se trouvent les données requises.

Lorsqu'une page est requise par un programme, le mécanisme de pagination alloue une page physique libre de façon non déterministe et recopie les données de la page stockée dans la mémoire 78 vers la page mémoire allouée.

Ainsi, lorsqu'un programme utilisateur est exécuté à partir d'un système d'exploitation, il est difficile de prédire à l'avance où vont se trouver en mémoire principale les différents segments qui composent un tel programme. Il est donc très difficile d'utiliser le coprocesseur 100 pour occulter seulement ces segments, occulter ces segments d'une façon différente des autres segments ou mettre ces segments sous contrôle dynamique d'intégrité.

A titre d'illustration, sous Linux, l'espace d'adressage virtuel d'un programme utilisateur est partitionné en cinq segments :
- un segment « text » contenant le code exécutable du programme. Ce segment est accessible uniquement en exécution et en lecture ;
- un segment « data » contenant les données initialisées du programme. Ce segment est accessible en lecture et en écriture ;
- un segment « bss » contenant les données non initialisées du programme ;
- un segment « Tas », ou « Heap » en anglais, de taille variable et utilisé pour allouer de la mémoire au programme à exécuter ; et
- un segment « Pile », ou « Stack » en anglais, utilisé pour stocker les variables locales du programme.

Le système d'exploitation comporte aussi un ordonnanceur capable d'ordonnancer automatiquement dans le temps l'exécution des différents programmes utilisateurs. Par exemple, sur le terminal 10, l'ordonnanceur partage le temps d'utilisation du microprocesseur 99 entre les différents programmes utilisateurs pour simuler une exécution simultanée de ces programmes utilisateurs.

Enfin, comme tout système d'exploitation, celui-ci comporte un ou plusieurs systèmes de fichiers. Un système de fichiers associe à un chemin d'accès et à un nom de fichier le contenu de ce fichier sur un dispositif de stockage d'informations tel que la mémoire 78. Les systèmes d'exploitation tels que Linux permettent également de définir des systèmes de fichiers qui ne sont pas nécessairement associés à un dispositif matériel de stockage de données.

Cette faculté est ici exploitée pour définir un système de fichiers particulier appelé ici « système de fichiers VMAPPER » en plus des systèmes de fichiers traditionnels permettant d'accéder au contenu de la mémoire 78. Le code du système de fichiers VMAPPER est intégré au code 128 du système d'exploitation. Il est donc chargé en même temps que le système d'exploitation dans la section 118 de la mémoire 92.

Ce système de fichiers VMAPPER met en correspondance :
- un chemin d'accès et le nom d'un fichier « LibACS » avec la section de mémoire 112, et
- l'adresse et le nom d'un fichier « DataACS » avec la section de mémoire 114.

Le système de fichiers VMAPPER gère l'ouverture et la fermeture de ces deux fichiers LibACS et DataACS ainsi que l'écriture et la lecture dans ces fichiers. De plus, le système de fichiers VMAPPER peut également gérer des droits d'accès à ces fichiers. Un exemple de réalisation de ce système de fichiers est décrit plus en détail en référence à la figure 3.

Le code 126 du module ACS est ici spécifiquement écrit de manière à exploiter le fichier DataACS pour y écrire et lire les données générées lors de son exécution. A cet effet, dans le code 126 du module ACS, les fonctions d'écriture et de gestion de la mémoire sont surchargées. A titre d'illustration, lorsque le module ACS est écrit en langage C, les fonctions « malloc » et « free » sont remplacées, respectivement, par des fonctions propriétaires VA-OS-alloc() et VA-OS-free(). Ces deux dernières fonctions permettent d'allouer une zone mémoire dans le fichier DataACS pour y inscrire des données puis les libérer. Ces fonctions VA-OS-alloc() et VA-OS-free() permettent donc d'exploiter la section 114 de la mémoire 92 pour gérer le tas du module ACS. Ainsi, le tas du module ACS est physiquement localisé dans la section 114.

Le chargement du code 126 du module ACS dans la mémoire 92 va maintenant être décrit en référence à la figure 3.

Initialement, lors d'une étape 150, le terminal 10 est mis sous tension ou réinitialisé.

En réponse, lors d'une étape 152, le compteur ordinal du coprocesseur 100 est initialisé. Lorsqu'il est initialisé, il pointe sur la première ligne d'instruction d'un code d'amorçage enregistré dans la mémoire 102 du coprocesseur. Cette première ligne correspond donc à la valeur initiale par défaut du compteur ordinal.

Lors d'une phase 154, le code d'amorçage est donc exécuté avant tout autre logiciel par le coprocesseur 100. Pour cela, le coprocesseur 100 maintient le microprocesseur 99 inactif. Par exemple, il maintient un plot de réinitialisation du microprocesseur 99 dans un état de réinitialisation.

L'exécution du code d'amorçage par le coprocesseur 100 le conduit à réaliser les étapes suivantes.

Lors d'une étape 156, le coprocesseur 100 charge le code 104 du chargeur d'amorçage et sa signature 106 dans la mémoire 92.

Ensuite, lors d'une étape 158, il vérifie l'authenticité du code 104 chargé en mémoire 92. A cet effet, lors de l'étape 158, le code d'amorçage a un format prédéfini qui permet de fournir au coprocesseur 100 les adresses de début et de fin de la plage d'adresses dans laquelle a été enregistré le code 104 en mémoire 92 ainsi que l'adresse de la signature 106.

La vérification de l'authenticité d'une plage de données est par exemple réalisée comme suit. Tout d'abord, le coprocesseur applique une fonction prédéterminée de hachage, plus connue sous le terme anglais de « Hash », aux données contenues dans la plage d'adresse spécifiée pour obtenir une première empreinte de ces données. Ensuite, le coprocesseur 100 déchiffre avec une clé publique la signature spécifiée pour obtenir une deuxième empreinte. Ensuite, le coprocesseur compare les première et deuxième empreintes. Si celles-ci sont identiques, le contenu de la plage de données est considéré comme authentique. Dans le cas contraire, le contenu de cette plage de données n'est pas correctement authentifié. Pour vérifier l'authenticité du code 104, le coprocesseur 100 utilise la clé KpubBL.

Lorsque le contenu de la plage de données n'est pas correctement authentifié, le terminal 10 est réinitialisé et le procédé retourne à l'étape 150.

Lors d'une étape 162, si le code 104 est correctement authentifié, le coprocesseur 100 initialise le microprocesseur 99 afin que celui-ci exécute le chargeur d'amorçage venant d'être authentifié en mémoire principale. Pour cela, par exemple, il place le compteur ordinal du microprocesseur 99 à l'adresse en mémoire physique de la première instruction du chargeur d'amorçage et relâche le plot de réinitialisation du microprocesseur 99.

A partir de ce moment débute une phase 166 lors de laquelle le code du chargeur d'amorçage est exécuté par le microprocesseur 99.

Initialement, lors d'une étape 168, le chargeur d'amorçage configure le coprocesseur 100 pour occulter les sections 112 et 114 de la mémoire 92. Dans ce cas particulier, l'algorithme de chiffrement choisi pour occulter la section 112 est plus robuste que celui choisi pour occulter la section 114. Par contre, l'algorithme de chiffrement le plus robuste comporte également un plus grand nombre d'instructions à exécuter pour chiffrer et déchiffrer une donnée. Il est donc plus long à exécuter. Ici, les clés de chiffrement utilisées pour occulter les sections 112 et 114 sont, respectivement, les clés K_{oc1} et K_{oc2}.

Ensuite, lors d'une étape 170, le chargeur d'amorçage charge le code 126 du module ACS en mémoire 92.

Lors d'une opération 172, le chargeur d'amorçage déchiffre le code 126 chargé en mémoire 92 avec la clé K_{ACS} et copie le code exécutable ainsi déchiffré dans la section 112. Typiquement, les opérations de déchiffrement avec la clé K_{ACS} sont réalisées par le coprocesseur 100.

Puisque la section 112 est occultée, le coprocesseur 100 chiffre avec la clé K_{oc1} chaque instruction déchiffrée avec la clé K_{ACS} avant de la copier dans la section 112. Ainsi, à l'issue de l'étape 172, le code exécutable du module ACS est enregistré dans la section 112 sous forme chiffrée avec la clé K_{oc1}.

Lors d'une étape 176, le chargeur d'amorçage configure le coprocesseur 100 pour mettre la section 112 sous contrôle dynamique d'intégrité. A cet effet, les adresses de début et de fin de la section 112 ainsi que l'adresse de la signature 130 sont fournies au coprocesseur 100.

Lors d'une étape 178, le coprocesseur 100 ainsi configuré vérifie l'authenticité du code du module ACS contenu dans la section 112. Lors de chaque vérification, le coprocesseur 100 :
- déchiffre le code du module ACS avec la clé K_{oc1}, puis
- applique une fonction de hachage prédéterminée pour obtenir une première empreinte du code 126, et enfin
- compare cette première empreinte du code du module ACS à une seconde empreinte obtenue en déchiffrant à l'aide de la clé publique K_{PubACS} la signature 130.

Si le code du module ACS dans la section 112 n'est pas authentique, le procédé retourne à l'étape 150. Dans le cas contraire, il se poursuit. On notera que l'étape 178 est automatiquement réitérée à intervalles réguliers par le coprocesseur 100. Cela permet de garantir l'authenticité du code du module ACS tant qu'il reste chargé dans la mémoire 92.

Lors d'une étape 180, le chargeur d'amorçage charge le code 128 du système d'exploitation dans la section 118. La section 118 est distincte des sections 112 et 114.

Lors d'une étape 182, le chargeur d'amorçage configure le coprocesseur 100 pour placer la section 118 sous contrôle dynamique d'intégrité. Pour cela, les adresses de début et de fin de cette section ainsi que l'adresse de la signature 132 sont fournies au coprocesseur 100.

Lors d'une étape 184, le coprocesseur 100 vérifie l'authenticité du code 128 chargé dans la section 118 à l'aide de la signature 132 et de la clé publique K_{PubOS} stockée dans la mémoire 102. Etant donné que le système de fichiers VMAPPER est incorporé au code 128, cette étape de vérification de l'authenticité du code 128 permet également de vérifier l'authenticité du système de fichiers VMAPPER. Elle est automatiquement réitérée à intervalles prédéfinis par le coprocesseur 100 de manière à s'assurer de l'intégrité du code 128 tant que celui-ci est chargé dans la section 118.

Si le code 128 chargé dans la section 118 n'est pas authentique, le terminal est réinitialisé et le procédé retourne à l'étape 150.

Dans le cas contraire, le procédé se poursuit par une étape 186. Lors de l'étape 186, le chargeur d'amorçage lance l'exécution du système d'exploitation en passant en paramètres la taille et l'emplacement des sections 112 et 114, et 120 en mémoire principale. Ainsi, le système d'exploitation définit l'espace utilisateur dans la section 120 et en dehors des sections 112, 114 et en dehors de la section 116 également. Après cela, le chargeur d'amorçage n'est plus utilisé tant que le terminal n'est pas réinitialisé, c'est-à-dire tant qu'on ne retourne pas à l'étape 150. Ainsi, de préférence, pour libérer de l'espace dans la mémoire 92, le code du chargeur d'amorçage est effacé ou l'espace mémoire occupé par le code du chargeur d'amorçage est rendu disponible en écriture pour que d'autres applications puissent venir y écrire des informations et ainsi effacer tout ou partie de ce code.

Débute alors une nouvelle phase 190 lors de laquelle s'exécute le système d'exploitation.

Lors d'une étape 192, le système d'exploitation charge le système de fichiers VMAPPER. La description de cette opération est faite dans le cas particulier où le système d'exploitation est Linux 2, version 2.6.23. Elle est faite en référence à des fonctions et des primitives connues de ce système d'exploitation. Ces primitives et fonctions sont mises en gras dans les lignes qui suivent et ne seront pas expliquées en détail. Dans cet exemple, la fonctionnalité apportée par le système de fichiers VMAPPER est compilée dans le noyau. L'étape 192 est donc déclenchée par l'initialisation du noyau.

L'étape 192 débute par l'enregistrement du système de fichiers défini par le système de fichiers VMAPPER. L'enregistrement de ce système de fichiers est réalisé dans le système d'exploitation Linux à l'aide de l'appel à la fonction **register_filesystem().**

Le membre **get_sb** de la structure **file_system_type** passé en paramètre de la fonction **register_filesystem()** est placé à **get_sb_single.** Cette fonction générique de Linux permet de déclarer que le système de fichiers ne peut être monté qu'une seule fois. Cela permet de s'assurer qu'une seule instance de ce système de fichiers existe dans le système d'exploitation.

Ensuite, le système de fichiers est monté. Pour cela, une fonction définie dans le code du système de fichiers VMAPPER appelée V_fill_super() est passée en paramètre de **get_sb_single** puis appelée.

La fonction V_fill_super() remplit une structure du type **super_block** et place le membre **s_flags** de cette structure à la valeur **MS_RDONLY** et place le membre **s_op** de cette structure de façon à ce que le montage à nouveau de ce système de fichiers le maintienne en lecture seule.

La fonction V_fill_super() crée un nouvel inode avec la fonction **new_inode.** Cet inode représente le répertoire racine.

La fonction V_fill_super() crée un nouvel inode avec la fonction **new_inode.** Cet inode correspond à la section 112 et donc au module ACS. Ici, il porte le nom de fichier « LibACS ». Seuls les droits de lecture sont donnés sur ce fichier. De plus, seules quatre opérations sont autorisées sur le fichier LibACS : l'ouverture, la lecture, la fonction **MMAP** et la fonction « **release** ».

Lors de son utilisation, quelques octets du fichier LibACS contenant le module ACS doivent être lus. Pour cela, la fonction « **read** » permet la lecture du fichier LibACS à partir du système d'exploitation Linux. Lors de cette lecture, la section 112 est mise en correspondance avec une plage d'adresses de la section du système d'exploitation à l'aide de la fonction **ioremap.** Le contenu des premiers octets de la section 112 est copié à l'aide de la fonction **memcpy_fromio.** Ensuite, la correspondance d'adresses précédemment établie est supprimée à l'aide de l'appel à la fonction **iounmap.** Ceci permet de récupérer les premiers octets du fichier LibACS pour obtenir des informations utiles pour charger le module ACS.

Enfin, on procède au chargement du code du module ACS. Le chargement du code du module ACS est provoqué typiquement lorsqu'un programme utilisateur est chargé et qu'il déclare une dépendance au fichier libACS.

Lors de l'étape 194, le programme utilisateur est chargé par le chargeur de programme. Celui-ci va déclarer la librairie libACS présente dans l'espace virtuel du programme à l'aide de l'appel mmap. Cet appel est implémenté dans le système de fichiers Vmapper à l'aide de la fonction remap_pfn_range. Le système de fichiers Vmapper associe ainsi la plage d'adresse virtuelle réservée par le chargeur de programme à la librairie libACS à la plage d'adresse physique dans la section 112 où est copié le module ACS. Dans ces conditions, à chaque fois que ce programme utilisateur appelle le module ACS, celui-ci est indiqué comme étant en mémoire principale. Cela ne provoque donc pas de défaut de page et donc de tentative de la part du système d'exploitation de recharger à nouveau le code 126 dans une page de la section 120. Ainsi, bien que le code 126 ait été chargé en mémoire principale avant l'exécution du système d'exploitation, les programmes utilisateurs peuvent lancer l'exécution de ce module ACS comme si celui-ci avait été chargé par le système d'exploitation. A cet effet, les programmes utilisateurs appellent le fichier LibACS.

De plus, ici, le module ACS est sous contrôle dynamique d'intégrité et son code est occulté. On renforce donc la sécurité du terminal 10. Enfin, le fait que le module ACS soit chargé avant le début de l'exécution du système d'exploitation garantit que ce module ACS est chargé même s'il existe des failles sécuritaires dans le système d'exploitation et que les mécanismes de protection du code 126 sont correctement mis en place.

La fonction V_fill_super() crée également un nouvel inode avec la fonction **new_inode** correspondant au segment de tas. Cet inode porte le nom de fichier « DataACS » et correspond à la section 114. Seules trois opérations sont autorisées sur cet inode à savoir l'ouverture, la fermeture et la fonction **MMAP.**

Lors de l'exécution du module ACS, les données sensibles générées par le module ACS sont enregistrées et lues à partir du tas grâce aux fonctions VA-OS-alloc() et VA-OS-free(). Ces fonctions VA-OS-Alloc() et VA-OS-free() permettent d'allouer un bloc mémoire et de le libérer dans le fichier DataACS. Ainsi, les données sensibles générées par le module ACS sont enregistrées dans la section 114 et sont donc protégées puisque celles-ci sont automatiquement occultées par le coprocesseur 100.

La figure 4 décrit plus en détail un exemple de fonctionnement du module ACS lorsqu'il est exécuté par le processeur 90.

Lors d'une étape 200, le module ACS reçoit un message ECM_{i,t}. Lors d'une étape 202, il compare les droits d'accès contenus dans ce message ECM à des titres d'accès préenregistrés contenus, par exemple, dans son code 126. Si les droits d'accès ne correspondent pas aux titres d'accès, le procédé retourne à l'étape 200 pour recevoir le prochain message ECM_{i,t}. Dans le cas contraire, le procédé se poursuit par une étape 204. Lors de l'étape 204, le module ACS extrait le cryptogramme CW*_{i,t} contenu dans le message ECM_{i,t} reçu. Lors d'une étape 206, le module ACS déchiffre le cryptogramme CW*_{i,t} pour obtenir le mot de contrôle en clair CW_{i,t}. Pour cela, par exemple, le module ACS utilise une clé enregistrée dans le processeur 90. Lors d'une étape 208, ce mot de contrôle en clair CW_{i,t} est transmis au coprocesseur 74.

Par la suite, le coprocesseur 74 utilise ce mot de contrôle en clair pour désembrouiller le contenu multimédia embrouillé. Ce qui permet l'affichage en clair de ce contenu multimédia embrouillé sur l'écran 86.

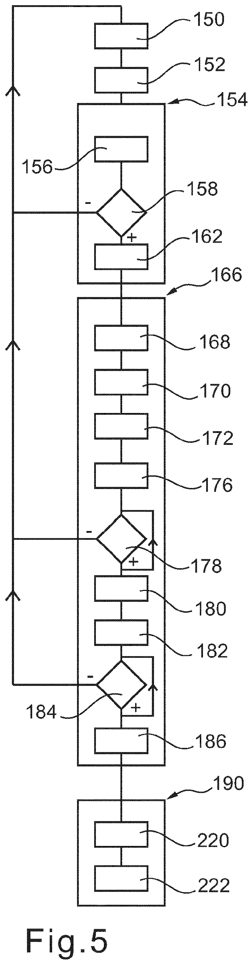

La figure 5 représente une variante du procédé de la figure 3. Pour la mise en oeuvre du procédé de la figure 5, le terminal 10 est identique à celui décrit en regard des figures 1 et 2 à l'exception du fait que le système d'exploitation comporte un système de fichiers VMAPPER modifié ainsi qu'un nouveau chargeur de programme VBinLoader. Ces deux fonctionnalités sont intégrées au code exécutable du noyau du système d'exploitation. Ainsi, elles sont chargées en même temps que le système d'exploitation dans la section 118.

La fonctionnalité VBinLoader est un chargeur de programme conçu pour charger le programme appelant le module ACS lorsque son exécution est demandée. Les chargeurs de programmes sont conçus pour placer en mémoire principale les données du programme dans les bons segments de mémoire. Un tel chargeur de programme est capable de comprendre où sont les informations dans le fichier du programme qui disent où est le code exécutable, les données et autres. Il est également capable de copier le programme dans la mémoire principale et d'initialiser les registres et de lancer l'exécution de ce programme.

Ici, le chargeur de programme VBinLoader ne copie pas le module ACS dans la mémoire principale mais :
- associe l'adresse virtuelle du code exécutable (segment « text ») dans l'espace mémoire virtuel du programme utilisateur qui appelle le module ACS à une adresse dans la section 112 où se trouve le code exécutable du module ACS,
- associe l'adresse du segment « bss » dans l'espace mémoire virtuel du programme utilisateur avec une plage d'adresses physiques dans la section 114, et
- associe l'adresse de la pile dans l'espace mémoire virtuel du programme utilisateur à une plage d'adresses physique dans la section 114.

Ainsi, lors de l'exécution du module ACS, toutes les données qui doivent être inscrites dans le segment « bss » ou dans la pile sont automatiquement enregistrées dans la section 114 et donc occultées.

Le système de fichiers VMAPPER est simplifié pour mettre uniquement en correspondance le nom du fichier LibACS avec la section 112. Dans ce mode de réalisation, il n'est pas nécessaire de mettre en correspondance le nom d'un fichier DataACS avec la section mémoire 114.

Par ailleurs, le code 126 est modifié pour que les variables sensibles initialisées soient en lecture seule. Par exemple, elles sont déclarées dans le code comme étant des constantes à l'aide de l'instruction « const ».

Le code 126 est également modifié pour allouer une variable de grande taille appelée ici VTas dans le segment « bss ». De plus, toutes les fonctions d'allocation et de libération de mémoire dans le tas, telles que les fonctions **malloc, free,** et autres, utilisées dans le code du module ACS sont remplacer par des fonctions qui allouent de la mémoire dans la zone de mémoire réservée à la variable VTas. Ainsi, même les données inscrites dans le tas par le module ACS sont protégées puisque celles-ci sont enregistrées dans la variable VTas de la section 114. De telles modifications permettent de protéger le tas sans nécessiter la modification du système d'exploitation pour gérer de façon différente le tas que ce qui est prévu habituellement.

Le procédé de la figure 5 est identique au procédé de la figure 3 à l'exception du fait que les étapes 192 et 194 sont remplacées, respectivement, par des étapes 220 et 222.

Lors de l'étape 220, le système d'exploitation initialise à la fois le système de fichiers VMAPPER modifié et le chargeur de programme VBinLoader.

Lors de l'étape 222, lorsque l'exécution du module ACS est appelée par un programme utilisateur, le chargeur de programme VBinLoader associe les plages d'adresses virtuelles réservées au segment « bss » et à la pile dans l'espace mémoire virtuel du programme utilisateur à des plages d'adresses dans la section 114. Ainsi, lors de l'exécution du module ACS, les données générées par ce module sont inscrites dans la section 114 et donc automatiquement occultées par le coprocesseur 100. Ainsi, leur confidentialité est préservée.

Le chargeur de programme VbinLoader associe également les adresses du module ACS dans l'espace virtuel d'adressage du programme utilisateur aux adresses de la section 112.

De nombreux autres modes de réalisation sont possibles. Par exemple, en variante, le code 126 est enregistré dans une mémoire non volatile sous forme chiffrée avec la clé K_{oc1}. Dans ces conditions, le chargeur d'amorçage peut directement copier le code ainsi chiffré dans la section 112. Les étapes consistant à déchiffrer le code 126 avec la clé K_{ACS} avant de l'enregistrer dans cette section 112 peuvent donc être omises. En effet, étant donné que le code 126 est directement chiffré avec la clé K_{oc1}, celui-ci est déjà occulté, y compris, dans la mémoire 78.

Le système d'exploitation peut également être stocké sous forme chiffrée puis déchiffré par le chargeur d'amorçage.

Le système d'exploitation peut contenir dans son code la taille et l'emplacement des sections 112 et 114. Ainsi, il n'est pas nécessaire de passer ces informations en tant que paramètre lors du lancement du système d'exploitation.

La mémoire 102 peut être remplacée par plusieurs mémoires non volatiles réparties à l'intérieur du circuit intégré formant le processeur 90.

De façon similaire, le coprocesseur 100 peut être implémenté sous la forme d'une association de plusieurs coprocesseurs répartis à l'intérieur du circuit intégré formant le processeur 90. Par exemple, le coprocesseur 100 peut comporter un sous-coprocesseur pour l'occultation des données en mémoire principale et un autre sous-coprocesseur pour la mise sous contrôle d'intégrité dynamique des données. Chacun des sous-coprocesseurs peut comporter sa propre unité arithmétique et logique de manière à exécuter des instructions en parallèle de celles du microprocesseur principale 99.

Dans un autre mode de réalisation, la totalité ou au moins une partie des fonctions du coprocesseur 100 sont exécutées en utilisant l'unité arithmétique et logique du microprocesseur 99. Dans ce mode de réalisation, c'est donc le microprocesseur 99 qui exécute, par exemple, le contrôle d'intégrité dynamique et/ou l'occultation des données. Pour cela, par exemple, le code des fonctions correspondantes est chargé dans la mémoire 92. Si le code est chargé dans la mémoire 92, l'authenticité de ce code doit être vérifiée. La vérification de l'authenticité de ce code est réalisée :
- à l'aide du code d'amorçage, ou
- à l'aide de fonctions elles-mêmes authentifiées par le code d'amorçage.

En effet, c'est le fait que le code d'amorçage ne soit pas accessible depuis l'extérieur du circuit intégré et qu'il soit uniquement exécuté à l'intérieur du processeur 90, sans faire appel à des mémoires extérieures, qui permet d'obtenir un bon niveau de sécurité.

Les sections 112 et 114 ne sont pas nécessairement contiguës en mémoire principale. De même, les sections 112, 114, 118, 120 et 116 n'ont pas besoin d'être contiguës. Ces sections peuvent également être disposées dans un ordre différent de celui représenté sur la figure 2 dans la mémoire 92.

Si le coprocesseur 100 est remplacé par un coprocesseur de sécurité capable d'occulter ou de mettre sous contrôle dynamique d'intégrité une plage discontinue d'adresses, alors il n'est pas nécessaire que les sections 112 et 114 correspondent chacune à une plage continue d'adresses physiques dans la mémoire principale.

Les clés publiques utilisées pour vérifier les signatures peuvent être enregistrées dans n'importe quelle mémoire et pas uniquement dans la mémoire 102. Par exemple, ces clés publiques sont enregistrées dans la mémoire 78. Dans ce dernier cas, de préférence, les clés publiques sont signées avec une clé privée dont la clé publique correspondante est enregistrée dans la mémoire 102.

Dans un autre mode de réalisation, au lieu d'utiliser des clés publiques pour vérifier les signatures, ce sont des clés cryptographiques secrètes qui sont utilisées. Par exemple, une redondance du code est chiffrée, à l'aide d'un algorithme cryptographique symétrique et de la clé secrète.

Le code 104 peut également être enregistré dans la mémoire 78 et non pas dans la mémoire 94. De façon réciproque, le code 126 peut être enregistré dans la mémoire 94 au lieu de la mémoire 78. Ces codes 104 et 126 peuvent également être enregistrés si nécessaire, dans la mémoire 102. Le code 104 ou 126 peut également être directement exécuté à partir de la mémoire 94.

Dans le procédé de la figure 5, il n'est pas nécessaire de surcharger les fonctions du code du module ACS pour utiliser un tas situé dans la section 114. En effet, en variante, le code du module ACS est écrit de telle façon que les données sensibles, générées par le module ACS lors de son exécutions, sont uniquement enregistrées soit dans la pile soit dans le segment « bss ».

Ce qui a été décrit ci-dessus dans le cas particulier du module ACS s'applique à tout module logiciel dont il est souhaitable :
- de s'assurer qu'il est correctement chargé en mémoire principale,
- de s'assurer de son authenticité,
- de s'assurer de l'authenticité du code réellement exécuté par le processeur et non d'une copie du code et/ou
- de préserver la confidentialité de son code.

Ainsi ce mode de chargement d'un module logiciel peut trouver à s'appliquer dans d'autres domaines techniques tels que les domaines de la gestion des droits numériques (ou DRM, pour Digital Rights Management) ou des antivirus.

Enfin, le contrôle d'intégrité du module logiciel peut être mis en oeuvre indépendamment de l'occultation du code et des données de ce module logiciel.

## Revendications

1. Procédé de chargement d'un code d'au moins un module logiciel dans une mémoire principale par un processeur de sécurité, dans lequel le processeur de sécurité exécute :
- un code d'amorçage qui charge (156) en mémoire principale le code d'un chargeur d'amorçage puis lance (162) l'exécution de ce chargeur d'amorçage à partir de la mémoire principale, le code d'amorçage étant enregistré dans une mémoire non volatile en lecture seule du processeur à partir de la première adresse sur laquelle pointe un compteur ordinal du processeur immédiatement après sa réinitialisation, puis
- le code du chargeur d'amorçage pour charger (180) dans la mémoire principale le code d'un système d'exploitation multitâches, puis lancer l'exécution de ce système d'exploitation à partir de cette mémoire principale, ce système d'exploitation étant configuré pour définir l'espace utilisateur dans une plage d'adresses réduite de la mémoire principale,
- le système d'exploitation pour ordonnancer l'exécution simultanée de plusieurs programmes utilisateurs par ce processeur,
dans lequel :
- avant le lancement de l'exécution du chargeur d'amorçage, le code d'amorçage, exécuté par le processeur, vérifie (158) l'authenticité du code du chargeur d'amorçage à partir d'une signature de ce code et d'une clé cryptographique, et lance l'exécution de ce chargeur d'amorçage uniquement si le code est authentique,
- le chargeur d'amorçage charge (170) également en mémoire principale le code du module logiciel, avant le lancement de l'exécution du système d'exploitation, dans une plage d'adresses de la mémoire principale située en dehors de ladite plage d'adresses réduite,
- lors de son exécution, le chargeur d'amorçage configure (176) un coprocesseur de sécurité, présent à l'intérieur du circuit intégré du processeur, pour qu'il vérifie l'authenticité du code du module logiciel en fonction d'une signature fournie avec le code de ce module et d'une clé cryptographique,
- après le lancement de l'exécution du système d'exploitation, le coprocesseur de sécurité vérifie (178) automatiquement à intervalle prédéfini l'authenticité du code chargé du module logiciel et l'exécution du module logiciel est empêchée si celui-ci n'est pas authentique, ce coprocesseur utilisant à cet effet sa propre mémoire non volatile et sa propre mémoire à accès aléatoire pour exécuter sans recours à la mémoire principale cette vérification de l'authenticité du code du module logiciel, cette mémoire non volatile et cette mémoire à accès aléatoire étant uniquement accessibles par le coprocesseur de sécurité, et
- après son lancement, le système d'exploitation redirige (194) un appel à ce module logiciel à partir d'un programme utilisateur vers l'adresse de la mémoire principale où le code de ce module logiciel a été chargé avant le lancement de l'exécution du système d'exploitation en utilisant un système de fichiers spécifique du système d'exploitation qui associe automatiquement l'adresse du module logiciel dans l'espace mémoire virtuel du programme utilisateur à l'adresse physique du module logiciel dans la mémoire principale.

2. Procédé selon la revendications 1, dans lequel :
- le chargeur d'amorçage configure (168) un coprocesseur de sécurité, présent à l'intérieur du circuit intégré du processeur, pour occulter des instructions enregistrées dans une première plage d'adresses de la mémoire principale où le code du module logiciel a été chargé, l'occultation consistant à maintenir sous forme chiffrée avec une clé cryptographique K_{oc1}, les instructions du code du module logiciel enregistrées dans cette plage d'adresses, et
- après le lancement de l'exécution du système d'exploitation, le coprocesseur de sécurité déchiffre automatiquement avec la clé K_{oc1} chaque instruction lue dans cette première plage d'adresses avant son exécution par le processeur, le coprocesseur utilisant à cet effet sa propre mémoire non volatile et sa propre mémoire à accès aléatoire pour exécuter sans recours à la mémoire principale ce déchiffrement avec la clé K_{oc1}, cette mémoire non volatile et cette mémoire à accès aléatoire étant uniquement accessibles par le coprocesseur de sécurité.

3. Procédé selon la revendication 2, dans lequel le procédé comprend l'enregistrement du code exécutable du module logiciel sous forme chiffrée avec la clé K_{oc1} dans une mémoire non volatile et le chargeur d'amorçage charge directement dans la mémoire principale ce code du module logiciel chiffré avec la clé K_{oc1}.

4. Procédé selon l'une quelconque des revendications 1 à 3, dans lequel :
- le chargeur d'amorçage configure (168) un coprocesseur de sécurité, présent à l'intérieur du circuit intégré du processeur, pour occulter des données enregistrées dans une seconde plage d'adresses de la mémoire principale, l'occultation consistant à chiffrer ces données, puis
- lors de son exécution (194), après le lancement du système d'exploitation, le module logiciel enregistre des données dans cette seconde plage d'adresses, et
- en réponse, le coprocesseur de sécurité chiffre chaque donnée à enregistrer dans cette seconde plage d'adresses, avant qu'elle soit déposée sur un bus de données reliant le processeur à la mémoire principale et déchiffre chaque donnée lue par le processeur dans cette seconde plage d'adresses au moment où elle est reçue par le processeur sur le bus de données avant son utilisation par le processeur de manière à ce que chaque données enregistrées dans la seconde plage d'adresses de la mémoire principale soit présente uniquement sous forme chiffrée en dehors du circuit intégré constituant le processeur, le coprocesseur utilisant à cet effet sa propre mémoire non volatile et sa propre mémoire à accès aléatoire pour exécuter sans recours à la mémoire principale ce chiffrement et ce déchiffrement, cette mémoire non volatile et cette mémoire à accès aléatoire étant uniquement accessibles par le coprocesseur de sécurité.

5. Procédé selon l'une quelconque des revendications 1 à 4, dans lequel :
- lors de son exécution, le chargeur d'amorçage configure (182) un coprocesseur de sécurité, présent à l'intérieur du circuit intégré du processeur, pour qu'il vérifie l'authenticité du code chargé du système d'exploitation en fonction d'une signature fournie avec le code de ce système d'exploitation et d'une clé cryptographique,
- après le lancement de l'exécution du système d'exploitation, le coprocesseur de sécurité vérifie automatiquement à intervalle prédéfini l'authenticité du code du système d'exploitation et l'exécution du système d'exploitation est empêchée si celui-ci n'est pas authentique, ce coprocesseur utilisant à cet effet sa propre mémoire non volatile et sa propre mémoire à accès aléatoire pour exécuter sans recours à la mémoire principale cette vérification de l'authenticité du code du système d'exploitation, cette mémoire non volatile et cette mémoire à accès aléatoire étant uniquement accessibles par le coprocesseur de sécurité.

6. Procédé selon l'une quelconque des revendications précédentes, dans lequel le chargeur d'amorçage charge (170) le code du module logiciel dans une plage continue d'adresses de la mémoire principale non paginée par le système d'exploitation.

7. Procédé selon l'une quelconque des revendications précédentes, dans lequel le code du chargeur d'amorçage n'est plus exécuté après le lancement du système d'exploitation et cela tant que le processeur de sécurité n'est pas réinitialisé.

8. Procédé selon l'une quelconque des revendications précédentes, dans lequel le système d'exploitation lancé met en place un mécanisme de mémoire virtuelle entre l'espace utilisateur, appelée sous-section utilisateur, de la mémoire principale et une ou plusieurs mémoires de masse.

9. Procédé selon l'une quelconque des revendications précédentes, dans lequel le module logiciel comprend des données ou du code d'une librairie d'accès conditionnel, ces données ou ce code permettant de déchiffrer un cryptogramme d'un mot de contrôle présent dans un message ECM (Entitlement Control Message).

10. Procédé de réception d'un contenu multimédia embrouillé avec des mots de contrôle CW_{i,t}, ce procédé comportant :
- la réception (200) d'un message ECM (Entitlement Control Message) contenant un cryptogramme CW*_{i,t} du mot de contrôle CW_{i,t}
- le chargement d'un module logiciel dans une mémoire principale d'un terminal de réception, ce module logiciel étant apte à déchiffrer le cryptogramme CW*_{i,t} pour obtenir le mot de contrôle CW_{i,t}, lorsqu'il est exécuté par un processeur raccordé à la mémoire principale par un bus de données,
- l'exécution par le processeur du module logiciel pour déchiffrer (206) le cryptogramme CW*_{i,t},
- le désembrouillage du contenu multimédia embrouillé à l'aide du mot de contrôle en clair CW_{i,t} dans lequel le procédé comporte le chargement du module logiciel conformément à l'une quelconque des revendications précédentes.

11. Support (78, 94, 102) d'enregistrement d'informations, **caractérisé en ce qu'**il comporte des instructions pour la mise en oeuvre d'un procédé conforme à l'une quelconque des revendications précédentes, lorsqu'elles sont exécutées par un processeur électronique de sécurité.

12. Terminal équipé :
- d'une mémoire principale (92),
- d'un processeur (90) de sécurité se présentant sous la forme d'un circuit intégré dans lequel est implémenté un microprocesseur (99) apte à exécuter des instructions enregistrées dans la mémoire principale, un coprocesseur (100) de sécurité, une mémoire (102) non volatile et une mémoire (103) à accès aléatoire accessible uniquement par le coprocesseur de sécurité, ce processeur étant raccordé à la mémoire principale par l'intermédiaire d'un bus de données,
- d'un code (128) d'un système d'exploitation multitâches apte à ordonnancer l'exécution simultanée de plusieurs programmes utilisateurs lorsqu'il est exécuté par le processeur,
- d'un code (104) d'un chargeur d'amorçage apte à charger dans la mémoire principale le code du système d'exploitation multitâches, puis à lancer l'exécution de ce système d'exploitation à partir de cette mémoire principale lorsqu'il est exécuté par le processeur, ce système d'exploitation étant configuré pour définir l'espace utilisateur dans une plage d'adresses réduite de la mémoire principale,
- des instructions d'un code d'amorçage qui charge en mémoire principale le code du chargeur d'amorçage lorsque ces instructions sont exécutées par le processeur, ces instructions étant enregistrées dans la mémoire (102) non volatile du coprocesseur à partir de la première adresse sur laquelle pointe un compteur ordinal du processeur immédiatement après chaque réinitialisation de ce processeur,
- d'une ou plusieurs mémoires (78, 94) non volatiles contenant le code (126) d'un module logiciel,
dans lequel :
- le code d'amorçage est apte, lorsqu'il est exécuté par le processeur et avant le lancement de l'exécution du chargeur d'amorçage, à vérifier l'authenticité du code du chargeur d'amorçage à partir d'une signature de ce code et d'une clé cryptographique, et à lancer l'exécution de ce chargeur d'amorçage uniquement si le code est authentique,
- le chargeur d'amorçage (104) est également apte à charger en mémoire principale le code du module logiciel, avant le lancement de l'exécution du système d'exploitation, dans une plage d'adresses de la mémoire principale située en dehors de ladite plage d'adresses réduite, lorsqu'il est exécuté par le processeur,
- le chargeur d'amorçage est apte, lorsqu'il est exécuté par le processeur, à configurer le coprocesseur de sécurité, présent à l'intérieur du circuit intégré du processeur, pour qu'il vérifie l'authenticité du code du module logiciel en fonction d'une signature fournie avec le code de ce module et d'une clé cryptographique,
- après le lancement de l'exécution du système d'exploitation, le coprocesseur de sécurité est apte à vérifier automatiquement à intervalle prédéfini l'authenticité du code chargé du module logiciel et à empêcher l'exécution du module logiciel si celui-ci n'est pas authentique, ce coprocesseur utilisant à cet effet sa propre mémoire non volatile et sa propre mémoire à accès aléatoire pour exécuter sans recours à la mémoire principale cette vérification de l'authenticité du code du module logiciel, cette mémoire non volatile et cette mémoire à accès aléatoire étant uniquement accessibles par le coprocesseur de sécurité, et
- après son lancement, le système d'exploitation (128) est apte à rediriger un appel à ce module logiciel à partir d'un programme utilisateur vers l'adresse de la mémoire principale où le code de ce module logiciel a été chargé avant le lancement de l'exécution du système d'exploitation en utilisant un système de fichiers spécifique du système d'exploitation qui associe automatiquement l'adresse du module logiciel dans l'espace mémoire virtuel du programme utilisateur à l'adresse physique du module logiciel dans la mémoire principale, lorsqu'il est exécuté par le processeur.

13. Terminal selon la revendication 12, dans lequel :
- le terminal comprend un récepteur (70) de message ECM,
- le module logiciel (126) est apte à recevoir un message ECM, à déchiffrer le cryptogramme CW*_{i,t} du mot de contrôle CW_{i,t} contenu dans le message ECM lorsqu'il est exécuté par le processeur, et
- le terminal comprend un désembrouilleur (74) apte à désembrouiller un contenu multimédia embrouillé à l'aide du mot de contrôle CW_{i,t} déchiffré par le module logiciel.

## Patentansprüche

1. Verfahren zum Laden eines Codes wenigstens eines Software-Moduls in einen Hauptspeicher durch einen Sicherheitsprozessor, wobei der Sicherheitsprozessor ausführt:
- einen Bootcode, welcher den Code eines Bootloaders in den Hauptspeicher lädt (156) und anschließend die Ausführung dieses Bootloaders aus dem Hauptspeicher startet (162), wobei der Bootcode in einem nichtflüchtigen Nur-LeseSpeicher des Prozessors ab der ersten Adresse, auf welche ein Befehlszähler des Prozessors unmittelbar nach seiner Neuinitialisierung zeigt, aufgezeichnet ist, danach
- den Code des Bootloaders, um den Code eines Multitasking-Betriebssystems in den Hauptspeicher zu laden (180) und anschließend die Ausführung dieses Betriebssystems aus diesem Hauptspeicher zu starten, wobei dieses Betriebssystem dafür konfiguriert ist, den Benutzerplatz in einem reduzierten Adressbereich des Hauptspeichers zu definieren,
- das Betriebssystem, um die gleichzeitige Ausführung mehrerer Anwenderprogramme durch diesen Prozessor zu planen,
wobei:
- vor dem Starten der Ausführung des Bootloaders der Bootcode, der von dem Prozessor ausgeführt wird, die Authentizität des Codes des Bootloaders anhand einer Signatur dieses Codes und eines kryptographischen Schlüssels überprüft (158) und die Ausführung dieses Bootloaders nur dann startet, wenn der Code authentisch ist,
- der Bootloader den Code des Software-Moduls vor dem Starten der Ausführung des Betriebssystems gleichfalls in den Hauptspeicher lädt (170), in einen Adressbereich des Hauptspeichers, der sich außerhalb des reduzierten Adressbereichs befindet,
- der Bootloader bei seiner Ausführung einen Sicherheits-Coprozessor, der innerhalb der integrierten Schaltung des Prozessors vorhanden ist, dafür konfiguriert (176), dass er die Authentizität des Codes des Software-Moduls in Abhängigkeit von einer mit dem Code dieses Moduls mitgelieferten Signatur und von einem kryptographischen Schlüssel überprüft,
- nach dem Starten der Ausführung des Betriebssystems der Sicherheits-Coprozessor automatisch in vorbestimmten Intervallen die Authentizität des geladenen Codes des Software-Moduls überprüft (178) und die Ausführung des Software-Moduls verhindert wird, wenn dieser nicht authentisch ist, wobei dieser Coprozessor zu diesem Zweck seinen eigenen nichtflüchtigen Speicher und seinen eigenen Direktzugriffsspeicher verwendet, um ohne Rückgriff auf den Hauptspeicher diese Überprüfung der Authentizität des Codes des Software-Moduls durchzuführen, wobei auf diesen nichtflüchtigen Speicher und diesen Direktzugriffsspeicher ausschließlich der Sicherheits-Coprozessor zugreifen kann, und
- das Betriebssystem nach seinem Start einen Aufruf dieses Software-Moduls aus einem Anwenderprogramm zu der Adresse des Hauptspeichers umleitet (194), wo der Code dieses Software-Moduls vor dem Start der Ausführung des Betriebssystems geladen worden ist, unter Verwendung eines spezifischen Dateisystems des Betriebssystems, welches automatisch die Adresse des Software-Moduls in dem virtuellen Speicherraum des Anwenderprogramms der physischen Adresse des Software-Moduls im Hauptspeicher zuordnet.

2. Verfahren nach Anspruch 1, wobei:
- der Bootloader einen Sicherheits-Coprozessor, der innerhalb der integrierten Schaltung des Prozessors vorhanden ist, dafür konfiguriert (168), Anweisungen zu verbergen, die in einem ersten Adressbereich des Hauptspeichers, wo der Code des Software-Moduls geladen worden ist, aufgezeichnet sind, wobei das Verbergen darin besteht, die Anweisungen des Codes des Software-Moduls, die in diesem Adressbereich aufgezeichnet sind, in einer mit einem kryptographischen Schlüssel K_{oc1} verschlüsselten Form zu halten, und
- nach dem Starten der Ausführung des Betriebssystems der Sicherheits-Coprozessor automatisch mit dem Schlüssel K_{oc1} jede Anweisung, die in diesem ersten Adressbereich gelesen wird, vor ihrer Ausführung durch den Prozessor entschlüsselt, wobei der Coprozessor zu diesem Zweck seinen eigenen nichtflüchtigen Speicher und seinen eigenen Direktzugriffsspeicher verwendet, um ohne Rückgriff auf den Hauptspeicher diese Entschlüsselung mit dem Schlüssel K_{oc1} durchzuführen, wobei auf diesen nichtflüchtigen Speicher und diesen Direktzugriffsspeicher ausschließlich der Sicherheits-Coprozessor zugreifen kann.

3. Verfahren nach Anspruch 2, wobei das Verfahren die Aufzeichnung des ausführbaren Codes des Software-Moduls in mit dem Schlüssel K_{oc1} verschlüsselter Form in einem nichtflüchtigen Speicher umfasst und der Bootloader diesen mit dem Schlüssel K_{oc1} verschlüsselten Code des Software-Moduls direkt in den Hauptspeicher lädt.

4. Verfahren nach einem der Ansprüche 1 bis 3, wobei:
- der Bootloader einen Sicherheits-Coprozessor, der innerhalb der integrierten Schaltung des Prozessors vorhanden ist, dafür konfiguriert (168), Daten zu verbergen, die in einem zweiten Adressbereich des Hauptspeichers aufgezeichnet sind, wobei das Verbergen darin besteht, diese Daten zu verschlüsseln, und danach
- das Software-Modul bei seiner Ausführung (194), nach dem Starten des Betriebssystems, Daten in diesem zweiten Adressbereich aufzeichnet, und
- in Reaktion darauf der Sicherheits-Coprozessor jedes Datenelement, das in diesem zweiten Adressbereich aufgezeichnet werden soll, verschlüsselt, bevor es auf einem Datenbus abgelegt wird, der den Prozessor mit dem Hauptspeicher verbindet, und jedes Datenelement, das von dem Prozessor in diesem zweiten Adressbereich gelesen wird, zu dem Zeitpunkt, zu dem es durch den Prozessor auf dem Datenbus empfangen wird, vor seiner Verwendung durch den Prozessor entschlüsselt, derart, dass alle Daten, die in dem zweiten Adressbereich des Hauptspeichers aufgezeichnet sind, außerhalb der integrierten Schaltung, die den Prozessor bildet, ausschließlich in verschlüsselter Form vorliegen, wobei der Coprozessor zu diesem Zweck seinen eigenen nichtflüchtigen Speicher und seinen eigenen Direktzugriffsspeicher verwendet, um ohne Rückgriff auf den Hauptspeicher diese Verschlüsselung und diese Entschlüsselung durchzuführen, wobei auf diesen nichtflüchtigen Speicher und diesen Direktzugriffsspeicher ausschließlich der Sicherheits-Coprozessor zugreifen kann.

5. Verfahren nach einem der Ansprüche 1 bis 4, wobei:
- der Bootloader bei seiner Ausführung einen Sicherheits-Coprozessor, der innerhalb der integrierten Schaltung des Prozessors vorhanden ist, dafür konfiguriert (182), dass er die Authentizität des geladenen Codes des Betriebssystems in Abhängigkeit von einer mit dem Code dieses Betriebssystems mitgelieferten Signatur und von einem kryptographischen Schlüssel überprüft,
- nach dem Starten der Ausführung des Betriebssystems der Sicherheits-Coprozessor automatisch in vorbestimmten Intervallen die Authentizität des Codes des Betriebssystems überprüft und die Ausführung des Betriebssystems verhindert wird, wenn dieser nicht authentisch ist, wobei dieser Coprozessor zu diesem Zweck seinen eigenen nichtflüchtigen Speicher und seinen eigenen Direktzugriffsspeicher verwendet, um ohne Rückgriff auf den Hauptspeicher diese Überprüfung der Authentizität des Codes des Betriebssystems durchzuführen, wobei auf diesen nichtflüchtigen Speicher und diesen Direktzugriffsspeicher ausschließlich der Sicherheits-Coprozessor zugreifen kann.

6. Verfahren nach einem der vorhergehenden Ansprüche, wobei der Bootloader den Code des Software-Moduls in einen zusammenhängenden Adressbereich des Hauptspeichers lädt (170), für den kein Paging durch das Betriebssystem erfolgt.

7. Verfahren nach einem der vorhergehenden Ansprüche, wobei der Code des Bootloaders nach dem Starten des Betriebssystems nicht ausgeführt wird, solange der Sicherheitsprozessor nicht neu initialisiert ist.

8. Verfahren nach einem der vorhergehenden Ansprüche, wobei das gestartete Betriebssystem einen virtuellen Speichermechanismus zwischen dem Benutzerplatz, Benutzer-Teilabschnitt genannt, des Hauptspeichers und einem oder mehreren Massenspeichern einrichtet.

9. Verfahren nach einem der vorhergehenden Ansprüche, wobei das Software-Modul Daten oder Code einer Bibliothek mit bedingtem Zugriff umfasst, wobei diese Daten oder dieser Code ermöglichen, ein Kryptogramm eines Kontrollwortes zu entschlüsseln, das in einer ECM-Nachricht (Entitlement Control Message) vorhanden ist.

10. Verfahren zum Empfang eines mit Kontrollwörtern CW_{i,t} verwürfelten Multimedia-Inhalts, wobei dieses Verfahren umfasst:
- den Empfang (200) einer ECM-Nachricht (Entitlement Control Message), die ein Kryptogramm CW*_{i,t} des Kontrollwortes CW_{i,t} enthält,
- das Laden eines Software-Moduls in einen Hauptspeicher eines Empfangsendgerätes, wobei dieses Software-Modul in der Lage ist, das Kryptogramm CW*_{i,t} zu entschlüsseln, um das Kontrollwort CW_{i,t} zu erhalten, wenn es von einem Prozessor ausgeführt wird, der über einen Datenbus an den Hauptspeicher angeschlossen ist,
- die Ausführung des Software-Moduls durch den Prozessor, um das Kryptogramm CW*_{i,t} zu entschlüsseln (206),
- das Entwürfeln des verwürfelten Multimedia-Inhalts mithilfe des Kontrollwortes im Klartext CW_{i,t},
wobei das Verfahren das Laden des Software-Moduls gemäß einem der vorhergehenden Ansprüche umfasst.

11. Informationsaufzeichnungsmedium (78, 94, 102), **dadurch gekennzeichnet, dass** es Anweisungen zur Durchführung eines Verfahrens gemäß einem der vorhergehenden Ansprüche, wenn sie von einem elektronischen Sicherheitsprozessor ausgeführt werden, umfasst.

12. Endgerät, welches ausgestattet ist:
- mit einem Hauptspeicher (92),
- mit einem Sicherheitsprozessor (90) in Form einer integrierten Schaltung, in welcher ein Mikroprozessor (99) implementiert ist, der in der Lage ist, Anweisungen auszuführen, die in dem Hauptspeicher aufgezeichnet sind, einem Sicherheits-Coprozessor (100), einem nichtflüchtigen Speicher (102) und einem Direktzugriffsspeicher (103), auf den ausschließlich der Sicherheits-Coprozessor zugreifen kann, wobei dieser Prozessor über einen Datenbus an den Hauptspeicher angeschlossen ist,
- mit einem Code (128) eines Multitasking-Betriebssystems, das in der Lage ist, die gleichzeitige Ausführung mehrerer Anwenderprogramme zu planen, wenn er von dem Prozessor ausgeführt wird,
- mit einem Code (104) eines Bootloaders, der in der Lage ist, den Code des Multitasking-Betriebssystems in den Hauptspeicher zu laden und anschließend die Ausführung dieses Betriebssystems aus diesem Hauptspeicher zu starten, wenn er von dem Prozessor ausgeführt wird, wobei dieses Betriebssystem dafür konfiguriert ist, den Benutzerplatz in einem reduzierten Adressbereich des Hauptspeichers zu definieren,
- mit Anweisungen eines Bootcodes, welcher den Code des Bootloaders in den Hauptspeicher lädt, wenn diese Anweisungen von dem Prozessor ausgeführt werden, wobei diese Anweisungen in dem nichtflüchtigen Speicher (102) des Coprozessors ab der ersten Adresse, auf welche ein Befehlszähler des Prozessors unmittelbar nach jeder Neuinitialisierung dieses Prozessors zeigt, aufgezeichnet sind,
- mit einem oder mehreren nichtflüchtigen Speichern (78, 94), die den Code (126) eines Software-Moduls enthalten,
wobei:
- der Bootcode in der Lage ist, wenn er von dem Prozessor ausgeführt wird, und vor dem Starten der Ausführung des Bootloaders, die Authentizität des Codes des Bootloaders anhand einer Signatur dieses Codes und eines kryptographischen Schlüssels zu überprüfen und die Ausführung dieses Bootloaders nur dann zu starten, wenn der Code authentisch ist,
- der Bootloader (104) gleichfalls in der Lage ist, den Code des Software-Moduls vor dem Starten der Ausführung des Betriebssystems in den Hauptspeicher zu laden, in einen Adressbereich des Hauptspeichers, der sich außerhalb des reduzierten Adressbereichs befindet, wenn er von dem Prozessor ausgeführt wird,
- der Bootloader in der Lage ist, wenn er von dem Prozessor ausgeführt wird, den Sicherheits-Coprozessor, der innerhalb der integrierten Schaltung des Prozessors vorhanden ist, dafür zu konfigurieren, dass er die Authentizität des Codes des Software-Moduls in Abhängigkeit von einer mit dem Code dieses Moduls mitgelieferten Signatur und von einem kryptographischen Schlüssel überprüft,
- nach dem Starten der Ausführung des Betriebssystems der Sicherheits-Coprozessor in der Lage ist, automatisch in vorbestimmten Intervallen die Authentizität des geladenen Codes des Software-Moduls zu überprüfen und die Ausführung des Software-Moduls zu verhindern, wenn dieser nicht authentisch ist, wobei dieser Coprozessor zu diesem Zweck seinen eigenen nichtflüchtigen Speicher und seinen eigenen Direktzugriffsspeicher verwendet, um ohne Rückgriff auf den Hauptspeicher diese Überprüfung der Authentizität des Codes des Software-Moduls durchzuführen, wobei auf diesen nichtflüchtigen Speicher und diesen Direktzugriffsspeicher ausschließlich der Sicherheits-Coprozessor zugreifen kann, und
- das Betriebssystem (128) nach seinem Start in der Lage ist, einen Aufruf dieses Software-Moduls aus einem Anwenderprogramm zu der Adresse des Hauptspeichers umzuleiten, wo der Code dieses Software-Moduls vor dem Start der Ausführung des Betriebssystems geladen worden ist, unter Verwendung eines spezifischen Dateisystems des Betriebssystems, welches automatisch die Adresse des Software-Moduls in dem virtuellen Speicherraum des Anwenderprogramms der physischen Adresse des Software-Moduls im Hauptspeicher zuordnet, wenn es von dem Prozessor ausgeführt wird.

13. Endgerät nach Anspruch 12, wobei:
- das Endgerät einen Empfänger (70) für eine ECM-Nachricht umfasst,
- das Software-Modul (126) in der Lage ist, eine ECM-Nachricht zu empfangen und das in der ECM-Nachricht enthaltene Kryptogramm CW*_{i,t} des Kontrollwortes CW_{i,t} zu entschlüsseln, wenn es von dem Prozessor ausgeführt wird, und
- das Endgerät einen Entwürfeler (74) umfasst, der in der Lage ist, einen verwürfelten Multimedia-Inhalt mithilfe des von dem Software-Modul entschlüsselten Kontrollwortes CW_{i,t} zu entwürfeln.

## Claims

1. Method for loading a code of at least one software module in a main memory by a security processor, wherein the security processor executes:
- a boot code that loads (156), in the main memory, the code of a boot loader then launches (162) the execution of this boot loader from the main memory, the boot code being recorded in a non-volatile read-only memory of the processor from the first address to which an ordinal counter of the processor points immediately after it is rebooted, then
- the code of the boot loader in order to load (180), in the main memory, the code of a multitasking operating system, then launch the execution of this operating system from this main memory, this operating system being configured to define the user space in a limited range of addresses in the main memory,
- the operating system in order to schedule the simultaneous execution of a plurality of user programs by this processor,
wherein:
- before launching of the execution of the boot loader, the boot code, executed by the processor, verifies (158) the authenticity of the code of the boot loader from a signature of this code and a cryptographic key, and launches the execution of this boot loader only if the code is authentic,
- the boot loader also loads (170), in the main memory, the code of the software module, before launching of the execution of the operating system, in a range of addresses in the main memory that is situated outside of said limited range of addresses,
- when it is executed, the boot loader configures (176) a security coprocessor, present inside the integrated circuit of the processor, so that it verifies the authenticity of the code of the software module on the basis of a signature supplied with the code of this module and of a cryptographic key,
- after launching of the execution of the operating system, the security coprocessor automatically verifies (178), at a predefined interval, the authenticity of the loaded code of the software module, and the execution of the software module is prevented if said code is not authentic, this coprocessor to this end using its own non-volatile memory and its own random access memory to execute this verification of the authenticity of the code of the software module without using the main memory, this non-volatile memory and this random access memory being accessible only to the security coprocessor, and
- after it is launched, the operating system redirects (194) a request for this software module from a user program to the address in the main memory where the code of this software module was loaded before launching of the execution of the operating system, using a specific file system of the operating system that automatically associates the address of the software module in the virtual memory space of the user program with the physical address of the software module in the main memory.

2. Method according to Claim 1, wherein:
- the boot loader configures (168) a security coprocessor, present inside the integrated circuit of the processor, to conceal instructions recorded in a first range of addresses in the main memory where the code of the software module was loaded, the concealment consisting in keeping the instructions of the code of the software module that are recorded in this range of addresses in encrypted form using a cryptographic key K_{oc1}, and
- after launching of the execution of the operating system, the security coprocessor automatically decrypts, using the key K_{oc1}, each instruction read in this first range of addresses before execution thereof by the processor, the coprocessor to this end using its own non-volatile memory and its own random access memory to execute this decryption using the key K_{oc1} without using the main memory, this non-volatile memory and this random access memory being accessible only to the security coprocessor.

3. Method according to Claim 2, wherein the method comprises recording the executable code of the software module in encrypted form using the key K_{oc1} in a non-volatile memory and the boot loader loads this code of the software module encrypted using the key K_{oc1} directly in the main memory.

4. Method according to any one of Claims 1 to 3, wherein:
- the boot loader configures (168) a security coprocessor, present inside the integrated circuit of the processor, to conceal data recorded in a second range of addresses in the main memory, the concealment consisting in encrypting these data, then
- when it is executed (194), after launching of the operating system, the software module records data in this second range of addresses, and
- in response, the security coprocessor encrypts each item of data to be recorded in this second range of addresses before it is deposited on a data bus linking the processor to the main memory and decrypts each item of data read by the processor in this second range of addresses at the moment when it is received by the processor on the data bus before it is used by the processor in such a way that each item of data recorded in the second range of addresses in the main memory is present only in encrypted form outside of the integrated circuit that forms the processor, the coprocessor to this end using its own non-volatile memory and its own random access memory to execute this encryption and this decryption without using the main memory, this non-volatile memory and this random access memory being accessible only to the security coprocessor.

5. Method according to any one of Claims 1 to 4, wherein:
- when it is executed, the boot loader configures (182) a security coprocessor, present inside the integrated circuit of the processor, so that it verifies the authenticity of the loaded code of the operating system on the basis of a signature supplied with the code of this operating system and of a cryptographic key,
- after launching of the execution of the operating system, the security coprocessor automatically verifies, at a predefined interval, the authenticity of the code of the operating system, and the execution of the operating system is prevented if said code is not authentic, this coprocessor to this end using its own non-volatile memory and its own random access memory to execute this verification of the authenticity of the code of the operating system without using the main memory, this non-volatile memory and this random access memory being accessible only to the security coprocessor.

6. Method according to any one of the preceding claims, wherein the boot loader loads (170) the code of the software module in a continuous range of addresses in the main memory that is not paged by the operating system.

7. Method according to any one of the preceding claims, wherein the code of the boot loader is no longer executed after launching of the operating system for as long as the security processor is not rebooted.

8. Method according to any one of the preceding claims, wherein the launched operating system puts in place a virtual memory mechanism between the user space, called user subsection, of the main memory and one or more mass memories.

9. Method according to any one of the preceding claims, wherein the software module comprises data or code of a conditional access library, these data or this code making it possible to decrypt a cryptogram of a control word present in an ECM (Entitlement Control Message) message.

10. Method for receiving an item of multimedia content scrambled with control words CW_{i,t}, this method including:
- receiving (200) an ECM (Entitlement Control Message) message containing a cryptogram CW*_{i,t} of the control word CW_{i,t}
- loading a software module in a main memory of a reception terminal, this software module being able to decrypt the cryptogram CW*_{i,t} in order to obtain the control word CW_{i,t} when it is executed by a processor connected to the main memory by a data bus,
- execution, by the processor, of the software module in order to decrypt (206) the cryptogram CW*_{i,t},
- descrambling the scrambled item of multimedia content using the intelligible control word CW_{i,t},
wherein
the method includes loading the software module according to any one of the preceding claims.

11. Information recording medium (78, 94, 102), **characterized in that** it includes instructions for implementing a method according to any one of the preceding claims when they are executed by an electronic security processor.

12. Terminal equipped:
- with a main memory (92),
- with a security processor (90) taking the form of an integrated circuit in which there is implemented a microprocessor (99) able to execute instructions that are recorded in the main memory, a security coprocessor (100), a non-volatile memory (102) and a random access memory (103) accessible only to the security coprocessor, this processor being connected to the main memory by way of a data bus,
- with a code (128) of a multitasking operating system able to schedule the simultaneous execution of a plurality of user programs when it is executed by the processor,
- with a code (104) of a boot loader able to load, in the main memory, the code of the multitasking operating system, then to launch the execution of this operating system from this main memory when it is executed by the processor, this operating system being configured to define the user space in a limited range of addresses in the main memory,
- with the instructions of a boot code that loads, in the main memory, the code of the boot loader when these instructions are executed by the processor, these instructions being recorded in the non-volatile memory (102) of the coprocessor from the first address to which an ordinal counter of the processor points immediately after each reboot of this processor,
- with one or more non-volatile memories (78, 94) containing the code (126) of a software module,
wherein:
- the boot code is able, when it is executed by the processor and before launching of the execution of the boot loader, to verify the authenticity of the code of the boot loader from a signature of this code and a cryptographic key, and to launch the execution of this boot loader only if the code is authentic,
- the boot loader (104) is also able to load, in the main memory, the code of the software module, before launching of the execution of the operating system, in a range of addresses in the main memory that is situated outside of said limited range of addresses, when it is executed by the processor,
- the boot loader is able, when it is executed by the processor, to configure the security coprocessor, present inside the integrated circuit of the processor, so that it verifies the authenticity of the code of the software module on the basis of a signature supplied with the code of this module and of a cryptographic key,
- after launching of the execution of the operating system, the security coprocessor is able to automatically verify, at a predefined interval, the authenticity of the loaded code of the software module and to prevent the execution of the software module if said code is not authentic, this coprocessor to this end using its own non-volatile memory and its own random access memory to execute this verification of the authenticity of the code of the software module without using the main memory, this non-volatile memory and this random access memory being accessible only to the security coprocessor, and
- after it is launched, the operating system (128) is able to redirect a request for this software module from a user program to the address in the main memory where the code of this software module was loaded before launching of the execution of the operating system, using a specific file system of the operating system that automatically associates the address of the software module in the virtual memory space of the user program with the physical address of the software module in the main memory, when it is executed by the processor.

13. Terminal according to Claim 12, wherein:
- the terminal comprises an ECM message receiver (70),
- the software module (126) is able to receive an ECM message, to decrypt the cryptogram CW*_{i,t} of the control word CW_{i,t} contained in the ECM message when it is executed by the processor, and
- the terminal comprises a descrambler (74) able to descramble a scrambled item of multimedia content using the control word CW_{i,t} decrypted by the software module.
